# DEMANDE DE BREVET EUROPEEN

(11) **EP 2 816 808 A1**
(43) Date de publication de la demande: **24.12.2014**
(21) Numéro de dépôt: 14173041.6
(22) Date de dépôt: 18.06.2014
(51) Int. Cl.: H04N 21/234, H04N 21/2365, H04N 21/2368, H04N 21/81, H04N 21/2665

(54) **Dispositif et procédé de composition de programmes de sources différentes en bande de base**

(30) Priorité: 21.06.2013 FR 1355957
(71) Demandeur: France Brevets, 75009 Paris (FR)
(72) Inventeur: Perron, Claude, 35830 BETTON (FR); Guerin, Benoit, 35700 RENNES (FR); Cornard, Guillaume, 35440 MONTREUIL SUR ILLE (FR)
(74) Mandataire: Nguyen Van Yen, Christian

(57) **Abrégé**

L'invention concerne un dispositif d'insertion de contenus vidéo additionnels (incrustations, programmes secondaires) dans un programme vidéo principal. Ledit dispositif fonctionne en bande de base au sein d'un boitier unique d'encodage sous le contrôle d'un superviseur commun. Le superviseur est configuré pour passer au codeur des méta-data associées au images, lesdites méta-data comprenant des données temporelles, spatiales et dynamiques relatives à la planification de l'insertion, ainsi que des données d'analyse des fichiers d'images élaborées préalablement à l'insertion. Le codeur reçoit les dites méta-data et est configuré pour en déduire des stratégies d'optimisation du codage qui sont mises en oeuvre par des processus de codage ligne et de codage fichier susceptibles d'être exécutés simultanément ou séquentiellement.

## Description

La présente invention appartient au domaine de la diffusion de programmes vidéo. Plus précisément, elle trouve application lorsque des diffuseurs souhaitent insérer des contenus additionnels (tels que des publicités, des incrustations, des bandeaux d'information ou des sous-titrages), dans des programmes préparés par des producteurs. Les diffuseurs pourraient effectuer ladite insertion en bande de base (format non compressé), à la condition de s'équiper des mêmes dispositifs que les studios de production. Cette solution est d'un coût prohibitif, d'autant plus qu'il est nécessaire de prévoir autant de dispositifs que de modes de diffusion (satellite, terrestre, câble, ADSL, 4G, etc...). La conséquence est que les diffuseurs réalisent nominalement l'insertion desdits contenus additionnels en format compressé. De ce fait, la synchronisation des contenus principaux et additionnels est approximative, ce qui a un impact important sur la qualité de service.
La présente invention résout ce problème, non résolu par l'art antérieur, en procurant un dispositif et une méthode qui permettent de réaliser l'insertion de contenus additionnels en bande de base et d'obtenir ainsi une synchronisation à l'image près des contenus composés, sans avoir à multiplier les équipements.

A cet effet, la présente invention divulgue un dispositif de diffusion de programmes vidéo comprenant au moins un module d'acquisition d'au moins un programme principal; au moins un module de production d'au moins un élément additionnel choisi dans un groupe comprenant un programme secondaire et une incrustation; au moins un module de composition d'un programme composé à partir dudit au moins un élément additionnel et dudit au moins un programme principal ; au moins un module de codage pour diffusion dudit programme vidéo en sortie sur au moins un réseau de transmission de signaux vidéo; ledit dispositif de diffusion étant caractérisé en ce que le module de composition traite les images du programme principal et de l'élément additionnel en format non comprimé et en ce que les modules de production, de composition et de codage sont supervisés par un module de contrôle commun.

Avantageusement, le module d'acquisition comprend au moins un sous-module de décodage d'au moins un programme principal.

Avantageusement, le sous-module de décodage est configuré pour réaliser un décodage multiple.

Avantageusement, le module de production d'au moins un élément additionnel comprend un serveur de flux intégré configuré pour fournir au module de décodage du contenu compressé et au module de composition du contenu graphique ou textuel selon une planification opérée par un automate.

Avantageusement, le module de production de contenus additionnels comprend un sous-module de génération de contenus graphiques et textuels et un sous-module d'incrustation desdits contenus générés dans un programme vidéo principal ou secondaire.

Avantageusement, le module de contrôle commun est configuré pour recevoir de l'automate des informations relatives à ladite planification et les conditionner en méta-data fournies au module de codage.

Avantageusement, lesdites méta-data comprennent des éléments choisis dans un groupe de données comprenant des informations sur un temps de début, un temps de fin, une position, une surface occupée, un taux de transparence desdits contenus additionnels.

Avantageusement, le module de production comprend un sous-module d'analyse des fichiers d'images constituant les éléments additionnels, ledit sous-module d'analyse d'images étant configuré pour constituer des méta-data associées aux images du contenu additionnel, lesdites méta-data comprenant des informations de contenu intra-image et d'estimation de mouvement inter-images desdits contenus additionnels.

Avantageusement, le sous-module module d'analyse d'images est configuré pour réaliser ladite d'analyse sur la totalité des éléments additionnels destinés à une diffusion avec un programme principal préalablement à ladite diffusion.

Avantageusement, le module de codage est configuré pour recevoir en entrée lesdites méta-data et en déduire une stratégie de codage du programme composé.

Avantageusement, le module de codage met en oeuvre au moins un processus de codage, ledit au moins processus de codage étant choisi dans un groupe comprenant des processus de codage ligne et des processus de codage fichier.

Avantageusement, le dispositif de diffusion de programmes vidéo de l'invention est configuré pour recevoir les programmes vidéo encapsulés dans des trames IP et les réémettre au même format.

L'invention divulgue également un procédé de diffusion de programmes vidéo comprenant au moins une étape d'acquisition d'au moins un programme principal ; au moins une étape de production d'au moins un élément additionnel choisi dans un groupe comprenant un programme secondaire et une incrustation ; au moins une étape de composition d'un programme composé à partir dudit au moins un élément additionnel et dudit au moins un programme principal ; au moins une étape de codage pour diffusion dudit programme vidéo en sortie sur au moins un réseau de transmission de signaux vidéo; ledit procédé de diffusion étant caractérisé en ce que l'étape de composition traite les images du programme principal et de l'élément additionnel en format non comprimé et en ce que les étapes de production, de composition et de codage sont supervisées par une étape de contrôle commun.

Avantageusement, l'étape de contrôle commun reçoit en entrée des informations de planification d'un automate de production et les conditionne en méta-data fournies au module de codage.

Avantageusement, l'étape de production d'éléments additionnels comprend une sous-étape d'analyse des fichiers d'images constituant les éléments additionnels, ladite sous-étape d'analyse d'images permettant de constituer des méta-data associées aux images du contenu additionnel, lesdites méta-data comprenant des informations de contenu intra-image et d'estimation de mouvement inter-images desdits contenus additionnels.

Avantageusement, l'étape de codage reçoit en entrée lesdites méta-data et génère une stratégie de codage du programme composé basée sur au moins une partie de ces informations, ladite stratégie de codage étant mise en oeuvre par un processus choisi dans un groupe comprenant des processus de codage ligne et des processus de codage fichier.

L'invention divulgue également un dispositif de supervision d'un encodeur de programmes vidéo combinés comprenant un module de planification de l'insertion de flux vidéo d'au moins un élément additionnel choisi dans un groupe comprenant un programme vidéo secondaire et une incrustation d'images; un module de production de méta-data générées à partir d'informations appartenant à un groupe d'informations temporelles, spatiales et dynamiques sur l'insertion desdits éléments additionnels ; un module d'analyse des fichiers d'images constituant les éléments additionnels, ledit module d'analyse desdits fichiers d'images étant configuré pour générer des méta-data comprenant des informations de contenu intra-image et d'estimation de mouvement inter-images ; un module de choix des stratégies de codage ; Ledit dispositif de supervision étant caractérisé en ce que au moins une partie des sorties des méta-data en sortie des modules de planification et d'analyse d'images sont fournies au module de choix des stratégies de codage.

L'invention autorise également une planification précise de l'insertion des contenus additionnels. Elle permet aussi d'identifier les informations sur les contenus additionnels (au sein d'une image, ou d'une image à l'autre), sur la totalité des contenus additionnels et d'utiliser ces informations pour optimiser le codage du programme composé, plutôt que de se contenter des informations relatives aux images proches de l'image courante. En outre, par rapport aux configurations en bande de base de l'art antérieur le dispositif de l'invention est plus compact et moins gourmand en énergie.

L'invention sera mieux comprise et ses différentes caractéristiques et avantages ressortiront de la description qui suit de plusieurs exemples de réalisation et de ses figures annexées dont :
- La figure 1 représente l'architecture d'un système de diffusion de programmes vidéo de l'art antérieur opérant en bande de base ;
- Les figures 2a et 2b représentent deux variantes d'architecture d'un système de diffusion de programmes vidéo de l'art antérieur opérant en mode compressé ;
- La figure 3 représente l'architecture fonctionnelle d'un dispositif intégré d'encodage selon un mode de réalisation de l'invention ;
- La figure 4 représente l'organigramme des traitements d'un procédé de supervision de l'encodage de programmes vidéo composites selon un mode de réalisation de l'invention.

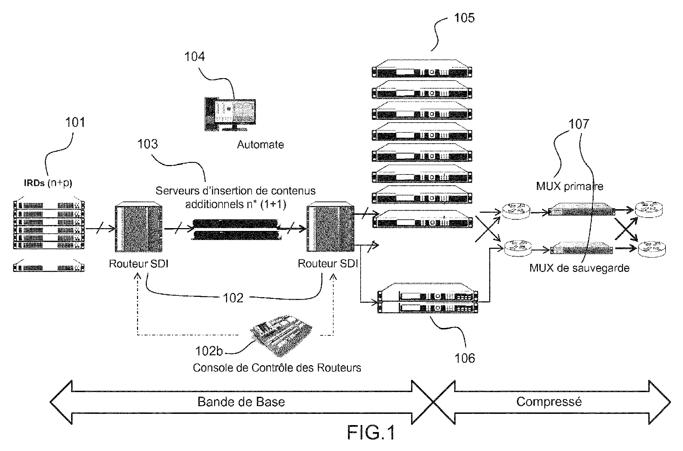

La figure 1 représente l'architecture d'un système de diffusion de programmes vidéo de l'art antérieur opérant en bande de base.
Il est possible, selon l'art antérieur de réaliser l'insertion de contenus additionnels en bande de base (i.e. en mode non compressé) en utilisant une architecture comprenant des décodeurs intégrés (IRD)101 (un décodeur par source de contenus), des routeurs à interface de communication série (routeur SDI) 102 avec leur console de contrôle 102b, un serveur d'insertion de contenus additionnels 103, un automate de contrôle des serveurs et des routeurs 104, un ensemble de codeurs 105, un par canal, un ensemble de codeurs redondants 106, en réserve pour garantir la haute disponibilité des services Vidéo, des multiplexeurs (MUX) 107 pour envoyer les contenus sur les différents réseaux.
Dans cette architecture de l'art antérieur, il est parfois nécessaire de prévoir un nombre important d'encodeurs pour servir un nombre important de services Video, comme par exemple pour de la diffusion par satellite de plusieurs centaines de services vidéo. Une telle architecture ne permet pas à un diffuseur de réaliser une insertion de programmes additionnels dans des conditions économiques, notamment lorsque des canaux multiples de diffusion sont utilisés.
L'invention permet de surmonter cet inconvénient de l'art antérieur.

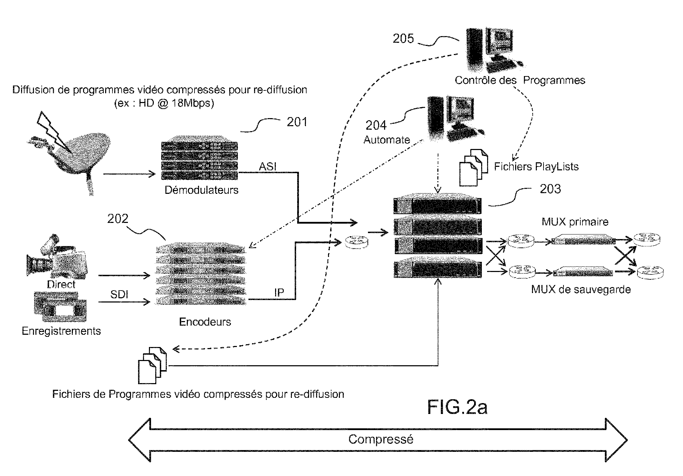

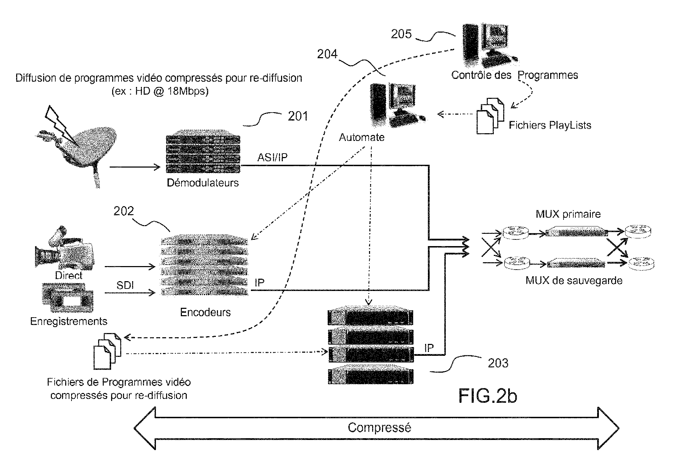

Les figures 2a et 2b représentent deux variantes d'architecture d'un système de diffusion de programmes vidéo de l'art antérieur opérant en mode compressé.
Dans une autre architecture de l'art antérieur, l'insertion de contenus additionnels est réalisée en mode compressé. Des Démodulateurs 201 sont prévus pour acquérir les programmes principaux dans lesquels des contenus additionnels doivent être insérés. Des encodeurs 202 sont prévus pour acquérir des programmes secondaires en bande de base. Des Serveurs 203 stockent des programmes secondaires sous forme de fichiers vidéo compressés dont le débit est déjà adapté à la diffusion.
Dans une 1^{ère} variante illustrée sur la figure 2a, les serveurs de flux compressés reçoivent les programmes principaux et secondaires pour commuter en mode compressé entre ces programmes principaux et insérer les programmes secondaires stockés sous forme de fichiers vidéo compressés. Dans cette variante, dans le cas de la norme de codage MPEG2, il est aussi possible d'ajouter partiellement du contenu graphique secondaire sur le programme résultant sans décompresser le contenu vidéo. Dans une 2^{ème} variante illustrée sur la figure 2b, les serveurs de flux compressés ne réalisent aucune commutation en mode compressé. La commutation entre les programmes principaux et les programmes secondaires provenant des encodeurs 202 ou des serveurs de programmes secondaires stockés sous forme de fichiers vidéo compressés 203 est assurée par le MUX de programmes.
Cependant, les commutations/insertions ne peuvent pas être réalisées de manière précise. Egalement, aucune information sur les contenus additionnels n'est fournie au codeur en amont, qui doit traiter de manière traditionnelle les contenus composés (i.e. des analyses intra-bloc et inter-bloc permettant d'exécuter les algorithmes de compression de l'art antérieur, ce qui conduira à une qualité d'image sortante sous-optimale).

Un système de gestion de trafic comprenant un automate 204 gère la planification des insertions en pilotant les serveurs de fichiers compressés et les encodeurs.
Un système de contrôle des flux de programmes principaux et des flux de contenus additionnels 205 est également prévu. Il gére le déplacement des fichiers de programme vers les serveurs 203. Il fournit à l'automation des fichiers « playlist » pour planifier la programmation du service vidéo.
La présente invention permet de surmonter les inconvénients de l'art antérieur décrits ci-dessus.

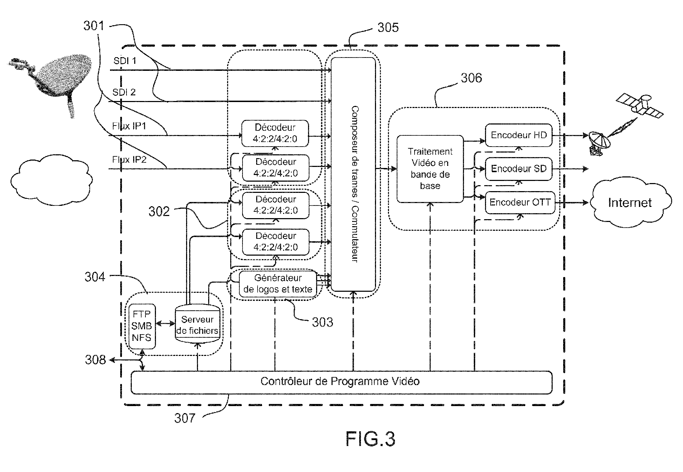

La figure 3 représente l'architecture fonctionnelle d'un dispositif intégré d'encodage selon un mode de réalisation de l'invention.
Dans l'architecture de l'invention, dans plusieurs de ses modes de réalisation, des contenus 301, d'origine diverse (flux SDI, flux IP), comportant des programmes principaux acquis par un diffuseur de producteurs divers de contenus, peuvent être intégrés avec des contenus additionnels. Ces flux qui arrivent sur la couche transport en mode compressés sont décodés.

Des flux vidéo source de programmes additionnels 302 sont stockées sur le serveur 304 dans un format pivot comme on l'a dit dont le but est de préserver la qualité du signal vidéo proche du signal vidéo source, tout en étant tout de même compressé afin d'en réduire le débit de façon significative par rapport au signal bande de base. Ce qui veut dire que, pour alimenter la fonction de composition d'image 305, les flux doivent être décodés. Deux fonctions de décodage sont nécessaires si l'on souhaite faire de la commutation « file to file » à l'image près, cette opération ne pouvant s'effectuer qu'en bande de base. En effet, les formats pivots généralement admis par les diffuseurs utilisent des formats compressés en MPEG faisant appel à des groupes d'images de l'ordre de la demi seconde à la seconde, ce qui fait qu'il n'est pas possible de commuter les signaux compressés à l'image près (mais seulement à une résolution qui correspond au groupe d'images). Le Contrôleur de Programmes Vidéo 307 renseigné par le Système de gestion de trafic 308 a la connaissance du nom du clip à jouer et de l'instant auquel il faut le jouer et va piloter ainsi les fonctions de décodage des flux de programmes principaux et de contenus additionnels afin de fournir les signaux en bande de base au Composeur de trames 305 au bon moment pour effecteur la commutation à l'image près en particulier.

Un module 303 permet l'insertion de contenus constitués de logos et de texte. Contrairement aux flux vidéo qu'il suffit de décoder dans un équipement 302, les messages texte ne constituent pas une vidéo. Il est nécessaire de transformer les suites de caractères que constituent les messages texte en des matrices de pixels vidéo en passant par ce qu'on appelle un générateur de caractères, inclus dans le module 303, qui à travers une police de caractères sous forme de matrice de points (bit map), va fournir-les matrices de pixels vidéo pour chacun des caractères, qui euxmêmes juxtaposés vont constituer le message texte à incruster sur l'image. Ce générateur de caractères peut être paramétré par le Contrôleur de Programmes Vidéo 307 pour dimensionner le message texte dans une matrice de pixels d'une taille déterminée. Il en est de même pour les logos qui peuvent être assimilés à une matrice de pixels vidéo avec une taille paramétrable. Pour les logos comme pour les textes, il peut y avoir une information de transparence qui sera utilisée par le Composeur de trames 305 pour superposer les plans vidéo.

Un serveur de flux additionnels 304 permet de disposer à l'avance de plusieurs types d'éléments vidéo. Le premier type d'élément est constitué par des flux vidéo compressés que les opérateurs de télévision vont charger à l'avance en utilisant un format de compression pivot dont le but est de préserver une très haute qualité du signal source. Ces flux pourront par exemple correspondre à des clips de publicité, ou bien encore des films ou des séries de télévision qui sont à insérer dans le programme final par le Composeur de trames 305 selon une planification imposée par le contrôleur de programmes vidéo local, lui-même contrôlé par une automation et un système de gestion de trafic externes 308. Une amélioration du dispositif consiste à intégrer la partie automation, sachant que le système de gestion de trafic externe, qui donne à l'équipement une liste de consignes datées est toujours externe. Une interface avec un système d'automation externe est donc nécessaire et, dans un mode possible de réalisation, s'appuie sur des protocoles standardisés (SCTE 104) qui sont adaptés car ils n'indiquent que les instants de commutation, pas la liste des clips de publicités à jouer. Le serveur de flux peut être également utilisé pour diffuser des films, des séries ou plus généralement tout élément de contenu commercialisé. Une des difficultés de la réalisation est de faire en sorte que, pour que toutes les commandes issues de l'automation soient des ordres avec une heure d'application, afin de découpler au maximum le séquençage interne (Contrôleur de programmes vidéo) de son environnement et de n'avoir des contraintes temps réel vidéo qu'à l'intérieur de l'équipement, mais pas dans l'interface avec l'automation (comme c'est le cas dans une installation traditionnelle, ce qui est un inconvénient de l'art antérieur surmonté par l'invention). Le deuxième type d'élément chargé à l'avance dans le serveur est constitué par les messages texte ou bien des logos. Ces messages peuvent être statiques, mais aussi animés (messages textes déroulants par exemple pour des messages d'alerte enlèvement, ou bien de l'information texte affichée pendant la diffusion d'un film sans l'interrompre.

La fonction de Composeur de trames 305 reçoit les programmes principaux 301, les contenus additionnels en provenance du serveur de flux 304 et les matrices de pixels vidéo provenant du générateur graphique 303. Le Composeur de trames réalise la sélection et le mélange des pixels des trames vidéo principales et additionnelles et des matrices de pixels graphiques provenant du générateur graphique 303, pour générer les trames de la vidéo (Base Band Vidéo) à encoder dans l'équipement 306. Dans un mode de réalisation, le Composeur de trames permet de :
- Sélectionner le programme principal à diffuser parmi les sources 301 en entrée ;
- Sélectionner le contenu additionnel parmi les sources secondaires 302 en sortie du serveur 304 ;
- Générer les trames en sélectionnant soit les trames vidéo du programme principal soit les trames vidéo du contenu additionnel ;
- Positionner et mélanger les matrices de pixels provenant du générateur graphique 303, avec les pixels des trames vidéo du programme vidéo composé.
Dans un autre mode de réalisation, il est possible de générer les trames vidéo de base du programme composé par mélange des pixels des trames du programme principal et du contenu additionnel. Il est aussi possible, avant mélange des pixels des trames, de réduire en dimensions les trames d'un des programmes (principal ou secondaire). Il est aussi possible, à partir d'un pixel d'une des trames, de positionner les trames redimensionnées ou non, d'un programme, par rapport aux trames de l'autre programme. Il est ainsi possible de générer des incrustations de vidéo sur une autre vidéo, ainsi que des glissements d'une image sur une autre (volets).
Ces différentes variantes sont données à titre purement illustratif des modes de réalisation de la fonction de Composition de trames de l'invention. D'autres possibilités pourront en être dérivées par l'homme du métier par application de ses connaissances générales.
Le Contrôleur de programmes vidéo 307 transmet notamment au Composeur de trames 305 :
- les paramètres de mélange entre les pixels de programmes vidéo principaux et secondaires et les pixels graphiques ;
- les paramètres de positionnement et déplacement des trames Video et des matrices de Pixels provenant du générateur graphique (3),
- les paramètres de redimensionnement des trames vidéo et des matrices de pixels graphiques comme, par exemple :
   o la largeur résultante, la hauteur résultante ou un facteur de réduction horizontal/vertical ;
   o le pixel aspect ratio original / pixel aspect ratio résultant ;
   o l'émargement (dit « croping ») haut, bas, droite, gauche ;
   o le paramétrage d'anti aliasing et de fréquence de coupure des filtre de redimensionnement.

Dans cette architecture intégrée de compression vidéo, les fonctions de prétraitement des trames vidéo (Base Band preprocessing) et de compression vidéo (Codeur) 306 peuvent bénéficier d'informations caractérisant la composition du programme vidéo résultant, les dites informations étant fournies par un Contrôleur de programmes vidéo 307 qui en dispose pour réaliser le contrôle temporel et spatial des insertions.
A titre d'exemple, des informations utiles pour le prétraitement et la compression sont notamment :
- la définition des zones de texte à conserver le mieux possible par le prétraitement et la compression ;
- la vitesse de défilement des textes défilants (dits « text-crawl ») pour optimiser la compression ;
- la définition des zones de graphiques comme les logos à conserver le mieux possible par le prétraitement et la compression ;
- la commutation entre programme principal et secondaire (et inversement) pour adapter la stratégie de compression et de régulation de débit de la vidéo comprimée ;
- la commutation d'une vidéo vers une image graphique fixe et inversement pour adapter la stratégie de compression et de régulation de débit de la vidéo comprimée.
L'homme du métier pourra compléter cette liste à partir de ses connaissances générales, sans sortir du champ d'application de l'invention.

Une interface avec un système d'automation externe 308 est nécessaire, et dans un mode possible de réalisation s'appuie sur des protocoles standardisés (SCTE 104) qui ne spécifient que des instants de changement de programme vidéo. Cependant il est possible d'ajouter aux commandes de changement de programme vidéo, des extensions privées (non normalisées) qui peuvent notamment spécifier :
- des listes d'identifiants de fichiers vidéo secondaires à appeler pour ce changement de programme ;
- des identifiants de fichiers graphiques à composer avec le programme en cours ;
- des identifiants de jeux de paramètres de composition, permettant au Contrôleur de programmes vidéo 307 de contrôler le Composeur de trames 305 aux instants de changement de programmes spécifiés.

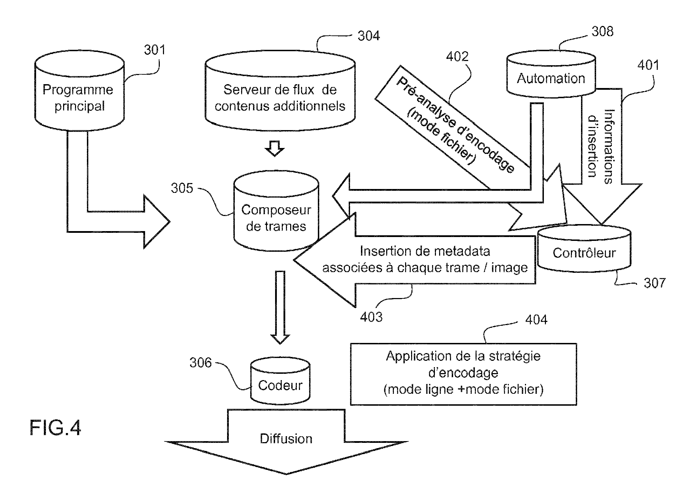

La figure 4 représente l'organigramme des traitements d'un procédé de supervision de l'encodage de programmes vidéo composites selon un mode de réalisation de l'invention.
L'un des avantages de l'architecture de l'invention est de permettre l'utilisation d'informations relatives au contenu et au positionnement des contenus additionnels pour optimiser la stratégie d'encodage. En outre, la mise à disposition des contenus additionnels sur le serveur de flux 304 en anticipation par rapport à leur diffusion permet de réaliser une pré-analyse des contenus en mode fichier pour en déduire les informations à passer au codeur qui permettront l'optimisation de la stratégie de codage sur le programme additionnel. La figure 4 indique de manière schématique l'enchaînement des étapes permettant de réaliser cette partie du procédé de l'invention.
Dans une étape 401, les informations de planification de l'insertion des programmes secondaires dans le programme principal sont conditionnées pour être fournies par le Contrôleur de programmes vidéo 307 au codeur 306. Des exemples d'informations de ce type ont été donnés ci-dessus en commentaire à la figure 3. Il est avantageux d'insérer ces informations dans une méta-data qui sera ensuite associée à une image, un bloc, une trame d'images du programme secondaire.
A titre complémentaire, mais préférentiellement, dans une étape 402, qui se déroulera avant la période de diffusion des contenus additionnels stockés sur le serveur de flux additionnels 304, on réalise une pré-analyse des images desdits contenus additionnels. Cette analyse se réalise donc en mode fichier de manière similaire au procédé utilisé pour encoder des fichiers qui seront diffusés en vidéo à la demande. En particulier, il est possible de réaliser la pré-analyse sur la totalité du contenu et d'éviter donc d'avoir à rejouer plusieurs passes pour tenir compte notamment de parties d'images qui restent fixes sur une longue durée. En mode de pré-analyse en ligne, il est nécessaire de recourir à plusieurs passes, dans la mesure où la profondeur d'analyse est réduite à quelques images.
Les informations issues de cette étape de pré-analyse sont adjointes aux méta-data en sortie de l'étape 401.
Les méta-data en sortie de l'étape 402 sont associées au niveau pertinent d'un ensemble d'images dans le Composeur de trames 305 au cours d'une étape 403.
Les méta-data sont utilisées par le Codeur 306 au cours d'une étape 404. Dans certains modes de réalisation, le codage est effectué en mode en ligne pour la partie du programme composé venant du programme principal et en mode fichier pour la partie du programme composé venant du programme secondaire. Dans ce cas, deux processus distincts sont exécutés successivement par le codeur. Le processus de codage en ligne utilise la partie des méta-data associée à la trame qui contient les informations de positionnement temporel, spatial et de transition des incrustations. Dans d'autres modes de réalisation, dans lesquels un programme secondaire et un programme principal peuvent coexister sur un même écran, soit de manière permanente, soit pour une transition, les deux processus de codage ligne et de codage fichier sont exécutés en fonction de la partie de l'image traitée par le codeur.

Les exemples décrits ci-dessus sont donnés à titre d'illustration de modes de réalisation de l'invention. Ils ne limitent en aucune manière le champ de l'invention qui est défini par les revendications qui suivent.

## Revendications

1. Dispositif de diffusion de programmes vidéo comprenant :
- Au moins un module d'acquisition (301) d'au moins un programme principal;
- Au moins un module de production (302, 303) d'au moins un élément additionnel choisi dans un groupe comprenant un programme secondaire et une incrustation;
- Au moins un module de composition (305) d'un programme composé à partir dudit au moins un élément additionnel et dudit au moins un programme principal ;
- Au moins un module de codage (306) pour diffusion dudit programme vidéo en sortie sur au moins un réseau de transmission de signaux vidéo;
ledit dispositif de diffusion étant **caractérisé en ce que** le module de composition traite les images du programme principal et de l'élément additionnel en format non comprimé et **en ce que** les modules de production, de composition et de codage sont supervisés par un module de contrôle commun (307).

2. Dispositif de diffusion de programmes vidéo selon la revendication 1, **caractérisé en ce que** le module d'acquisition comprend au moins un sous-module de décodage d'au moins un programme principal.

3. Dispositif de diffusion de programmes vidéo selon l'une des revendications 1 à 2, **caractérisé en ce que** le sous-module de décodage est configuré pour réaliser un décodage multiple.

4. Dispositif de diffusion de programmes vidéo selon l'une des revendications 1 à 3, **caractérisé en ce que** le module de production d'au moins un élément additionnel comprend un serveur de flux intégré configuré pour fournir au module de décodage du contenu compressé et au module de composition du contenu graphique ou textuel selon une planification opérée par un automate (308).

5. Dispositif de diffusion de programmes vidéo selon l'une des revendications 1 à 4, **caractérisé en ce que** le module de production de contenus additionnels comprend un sous-module de génération de contenus graphiques et textuels et un sous-module d'incrustation desdits contenus générés dans un programme vidéo principal ou secondaire.

6. Dispositif de diffusion de programmes vidéo selon la revendication 4, **caractérisé en ce que** le module de contrôle commun est configuré pour recevoir de l'automate des informations relatives à ladite planification et les conditionner en méta-data fournies au module de codage.

7. Dispositif de diffusion de programmes vidéo selon la revendication 6, **caractérisé en ce que** lesdites méta-data comprennent des éléments choisis dans un groupe de données comprenant des informations sur un temps de début, un temps de fin, une position, une surface occupée, un taux de transparence desdits contenus additionnels.

8. Dispositif de diffusion de programmes vidéo selon l'une des revendications 1 à 7, **caractérisé en ce que** le module de production comprend un sous-module d'analyse des fichiers d'images constituant les éléments additionnels, ledit sous-module d'analyse d'images étant configuré pour constituer des méta-data associées aux images du contenu additionnel, lesdites méta-data comprenant des informations de contenu intra-image et d'estimation de mouvement inter-images desdits contenus additionnels.

9. Dispositif de diffusion de programmes vidéo selon la revendication 8, **caractérisé en ce que** le sous-module module d'analyse d'images est configuré pour réaliser ladite analyse sur la totalité des éléments additionnels destinés à une diffusion avec un programme principal préalablement à ladite diffusion.

10. Dispositif de diffusion de programmes vidéo selon l'une des revendications 6 à 9, **caractérisé en ce que** le module de codage est configuré pour recevoir en entrée lesdites méta-data et en déduire une stratégie de codage du programme composé.

11. Dispositif de diffusion de programmes vidéo selon l'une des revendications 6 à 10, **caractérisé en ce que** le module de codage met en oeuvre au moins un processus de codage, ledit au moins processus de codage étant choisi dans un groupe comprenant des processus de codage ligne et des processus de codage fichier.

12. Dispositif de diffusion de programmes vidéo selon l'une des revendications 1 à 11, **caractérisé en ce qu'**il est configuré pour recevoir les programmes vidéo encapsulés dans des trames IP et les réémettre au même format.

13. Procédé de diffusion de programmes vidéo comprenant :
- Au moins une étape d'acquisition d'au moins un programme principal ;
- Au moins une étape de production d'au moins un élément additionnel choisi dans un groupe comprenant un programme secondaire et une incrustation ;
- Au moins une étape de composition d'un programme composé à partir dudit au moins un élément additionnel et dudit au moins un programme principal ;
- Au moins une étape de codage pour diffusion dudit programme vidéo en sortie sur au moins un réseau de transmission de signaux vidéo;
ledit procédé de diffusion étant **caractérisé en ce que** l'étape de composition traite les images du programme principal et de l'élément additionnel en format non comprimé et **en ce que** les étapes de production, de composition et de codage sont supervisées par une étape de contrôle commun.

14. Procédé de diffusion de programmes vidéo selon la revendication 13, **caractérisé en ce que** l'étape de contrôle commun reçoit en entrée des informations de planification d'un automate de production et les conditionne en méta-data fournies au module de codage.

15. Procédé de diffusion de programmes vidéo selon l'une des revendications 13 à 14, **caractérisé en ce que** l'étape de production d'éléments additionnels comprend une sous-étape d'analyse des fichiers d'images constituant les éléments additionnels, ladite sous-étape d'analyse d'images permettant de constituer des méta-data associées aux images du contenu additionnel, lesdites méta-data comprenant des informations de contenu intra-image et d'estimation de mouvement inter-images desdits contenus additionnels.

16. Procédé de diffusion de programmes vidéo selon l'une des revendications 14 à 15, **caractérisé en ce que** l'étape de codage reçoit en entrée lesdites méta-data et génère une stratégie de codage du programme composé basée sur au moins une partie de ces informations, ladite stratégie de codage étant mise en oeuvre par un processus choisi dans un groupe comprenant des processus de codage ligne et des processus de codage fichier.

17. Dispositif de supervision d'un encodeur de programmes vidéo combinés comprenant :
- Un module de planification (308) de l'insertion de flux vidéo d'au moins un élément additionnel choisi dans un groupe comprenant un programme vidéo secondaire et une incrustation d'images;
- Un module de production de méta-data générées à partir d'informations appartenant à un groupe d'informations temporelles, spatiales et dynamiques sur l'insertion desdits éléments additionnels ;
- Un module d'analyse des fichiers d'images constituant les éléments additionnels, ledit module d'analyse desdits fichiers d'images étant configuré pour générer des méta-data comprenant des informations de contenu intra-image et d'estimation de mouvement inter-images ;
- Un module de choix des stratégies de codage ;
Ledit dispositif de supervision étant **caractérisé en ce que** au moins une partie des sorties des méta-data en sortie des modules de planification et d'analyse d'images sont fournies au module de choix des stratégies de codage.
